# EUROPÄISCHE PATENTANMELDUNG

(11) **EP 2 657 280 A1**
(43) Veröffentlichungstag der Anmeldung: **30.10.2013**
(21) Anmeldenummer: 12165157.4
(22) Anmeldetag: 23.04.2012
(51) Int. Cl.: C08J 9/35, C08K 7/22, C08L 75/04, B29C 67/20

(54) **Mineralstoffpartikel enthaltender Polyurethan-Verbundwerkstoff**

(71) Anmelder: BASF SE, 67056 Ludwigshafen (DE)
(72) Erfinder: Eling, Berend, Dr., 49448 Lemförde (DE); Auffarth, Stefan, 49451 Holdorf (DE)

(57) **Zusammenfassung**

Ein Verbundwerkstoff, enthaltend expandierte Mineralstoffpartikel und eine Matrix aus Polyurethan, wobei der Anteil an expandierten Mineralstoffpartikeln mindestens 80 Gew.-%, bezogen auf den Verbundwerkstoff, beträgt, dessen Verwendung zur Wärmedämmung von Gebäuden, sowie ein Verfahren zur Herstellung des Verbundwerkstoffes welcher die Stufen
a) Einbringen von expandierten Mineralstoffpartikel in eine beheiz- und verschließbare, Entlüftungsöffnungen aufweisende Form,
b) Benetzen der expandierten Mineralstoffpartikel mit einer gegebenenfalls Treibmittelhaltigen Polyurethan-Reaktivharzmischung,
c) Schließen der Form, wobei die geschlossene Form ein Volumen aufweist, das durch die dichteste Packung der expandierten Mineralstoffpartikel vorgegeben ist, und
d) Aushärten und Entformen,
umfasst.

## Beschreibung

Die Erfindung betrifft einen Verbundwerkstoff, der expandierte Mineralstoffpartikel und eine Matrix aus Polyurethan enthält, ein Verfahren zur Herstellung des Verbundwerkstoffs, sowie die Verwendung des Verbundwerkstoffs.

Blähglas ist ein Baustoff aus recyceltem Altglas, der bei der Herstellung von Leichtbeton, Leichtputz, Leichtmauermörtel und in Wärmedämmplatten, Wärmedämmschüttungen, Putzträgerplatten, vorgehängten Fassadensystemen und Dekorfarben zum Einsatz kommt. Blähglas ist aufgeschäumtes Glas mit kleinen, luftgefüllten Poren und kann in Körnungen von 0,04 - 16 mm produziert werden. Das Granulat besitzt eine geschlossene Gitterstruktur. Im Gegensatz zum kantigen, gebrochenen Schaumglas(schotter), der in einem ähnlichen Verfahren produziert wird, jedoch auf Druck verdichtet, besteht Blähglas(granulat) aus Kugeln/Rundkörnern, die eine vielseitige Verarbeitung ermöglichen. Schüttungen aus Blähglas sind sehr leicht und dennoch druckfest, wärmedämmend, alkalibeständig, nicht brennbar, besitzen eine hohe Belastbarkeit und werden von Nagetieren, Schädlingen und Pilzen nicht angegriffen.

Blähglas wird aus Altglas produziert, das eine Körnung von unter 8 mm aufweist und damit nicht mehr für die Herstellung von Recyclingflaschen verwendet werden kann. Das für die Herstellung ausschließlich verwendete Altglas muss zuerst in Mahlanlagen zerkleinert werden. Das Glas-Pulver, Wasser und Füller werden zu einer homogenen Rohmischung aufbereitet. Anschließend wird es auf ca. 850 bis 1000 °C erhitzt. Zum Schäumen wird entweder direkt CO₂ eingeblasen, oder man versetzt das Gemisch mit Kohlestaub, der zu CO₂ verbrennt und damit viele kleine geschlossene Bläschen erzeugt. Nach dem Schäumen wird das Glas in Formen gegossen, in denen die Masse erstarrt. Nach dem Erkalten werden die Blöcke granuliert und nach Fraktionen getrennt (Siebung).

Blähglas ist sehr leicht, rund und bruchkornfrei, hoch wärmedämmend, schalldämmend, druckstabil, nicht brennbar, säurebeständig, schädlingssicher und leicht zu bearbeiten.

In der Offenlegungsschrift DE 10 2008 012 119 A1 werden Blähglasgranulate als wärme- und schallisolierende Füllstoffe für Jalousie-Lamellen beschrieben, die durch z.B. Polyurethan als Bindemittel verklebt sind.

Aus der deutschen Offenlegungsschrift 1 669 610 ist ein Verfahren zur Herstellung von Formkörpern bekannt, die geblähte Teilchen und organischen Hartschaum, wie z.B. Blähglasgranulat und Polyurethan-Hartschaum, enthalten. Hierzu wird einem kontinuierlichen Strom der geblähten Teilchen kontinuierlich frisch hergestellter, vorgeschäumter, noch fließfähiger organischer Schaum zugesetzt, sofort durchgemischt, weiterbefördert und das Gemisch unter Formgebung gehärtet.

In der GB 1,183,326 wird ein Verfahren zur Herstellung eines Verbundwerkstoffes aus anorganischen Partikeln beschrieben, die mit einem Polyurethan-Hartschaum verklebt werden. Das Polyurethan-Reaktivgemisch enthält ein physikalisches Treibmittel, welches bei erhöhtem Druck und einer Temperatur unter dem Siedepunkt des physikalischen Treibmittels in das Reaktivsystem oder eine der Komponenten eingebracht wird. Durch die einsetzende normale schaumbildende Reaktion wird das Polyurethan-Reaktivgemisch teilweise aufgeschäumt, bevor es mit den anorganischen Partikeln in Kontakt gebracht wird. Die Freisetzung des vorgeschäumten Gemisches führt zu einer Reduzierung des Drucks und ermöglicht eine weitere Erhöhung des Schaumvolumens ("Frothing" Technologie). Das homogene Gemisch aus teilweise aufgeschäumtem Polyurethan-Reaktivgemisch und anorganischen Partikeln wird diskontinuierlich oder kontinuierlich in die gewünschte Form gebracht und anschließend ausgehärtet. So können laminierte oder unlaminierte Formteile hergestellt werden.

In US 3,734,661 wird eine Apparatur beschrieben, bei der ein Hohlraum mit Deckschichten ausgelegt und z.B. mit Blähglasgranulat gefüllt wird. Der Behälter wird mit einem Deckel geschlossen und dann mit Polyurethanhartschaum ausgeschäumt. So kann man die Hohlräume zwischen den Blähglasgranulaten füllen und das Granulat mit den Deckschichten verkleben und erhält ein geschäumtes Kompositmaterial aus Blähglas und Polyurethan.

Im DE 2 012 992 A wird ein Verfahren beschrieben, bei dem ein flüssiges Reaktionsgemisch für einen Polyurethanschaum mit einem Gasstrom auf einen Füllstoffstrom, z.B. Blähglasgranulat, geleitet wird. So werden beide Ströme homogen vermischt, um gefüllte Polyurethanschäume zu erhalten.

Für die Herstellung derartiger Formkörper ist jedoch häufig die Verwendung hoher Bindemittelgehalte notwendig. Darüber hinaus sind viele anwendungstechnische Eigenschaften wie beispielsweise Wärmeleitfähigkeit oder Bruchfestigkeit noch verbesserungsbedürftig. Probleme ergeben sich häufig auch bei der Herstellung der Formkörper. Zahlreiche organische Bindemittel sind aufgrund ihrer hohen Viskosität nicht verwendbar.

Die aus dem Stand der Technik bekannten Verbundwerkstoffe aus Blähglasgranulat und einem Polyurethan-Bindemittel zeichnen sich durch eine relativ niedrige Dichte und gute Brandeigenschaften aus. Allerdings kann keines der beschriebenen Materialien eine Brandklasse nach DIN EN 13823 besser als B erreichen, da hierfür definitionsgemäß eine Gesamtwärmemenge von 7,5 MJ nach 600 Sekunden nicht überschritten werden darf (THR600s Total Heat Release; die gesamte Wärmefreisetzung der Probe in den ersten 600 s der Flammenbeanspruchung, Regelwerk EN 13501-1).

Branca et al. "Thermochim Acta", Vol 399; 2003; Page 127-137 haben die Verbrennungsenthalpie von Polyurethan Hartschaum (Schaumdichte= 38,0 kg/m³) bestimmt mittels Cone Kalorimeter Bestimmungen gemessen bei zwei Radiationsintensitäten. Die gemessene Verbrennungsenthalpien betrugen 14,7 MJ/kg bei einem Radiationsfluss von 25 kW/m² und 16,6 MJ/kg bei eine Radiationsfluss von 50 kW/m². Um unter der Gesamtwärmemenge von 7,5 MJ für das Komposit zu bleiben darf eine gewisse Menge organischen Materials nicht überschritten werden. Dies entspricht beim Einsatz von Polyurethan in der Herstellung des Komposits aufgrund der spezifischen Verbrennungsenthalpie des Polyurethans einem Anteil an organischen Bestandteilen von maximal 15 Gewichtsprozent.

In der Regel wird das Blähglasgranulat mit einem vorgeschäumten Polyurethan-Reaktivgemisch homogen vermischt und schäumt in der Folge zur endgültigen Form auf. Hierbei werden die einzelnen Blähglasgranulatperlen durch den aufsteigenden Schaum auseinander gedrückt, so dass sie im fertigen Verbundwerkstoff keinen Kontakt mehr zueinander haben. Hierdurch büßt das Material an Steifigkeit und Druckfestigkeit ein.

Aufgabe der Erfindung war es daher, einen Verbundwerkstoff bereitzustellen, der einen hervorragende Brandschutz sowie bei relativ geringem Bindemittelanteil sehr hohe Druckfestigkeit und Steifigkeit aufweist. Darüber hinaus sollte der Verbundwerkstoff eine geringe Wärmeleitfähigkeit und eine niedrige Dichte aufweisen.

Demgemäß wurde ein Verbundwerkstoff, enthaltend expandierte Mineralstoffpartikel und eine Matrix aus Polyurethan, gefunden, wobei der Anteil an expandierten Mineralstoffpartikeln mindestens 80 Gew.-%, bezogen auf den Verbundwerkstoff, beträgt.

Bevorzugt weist der Verbundwerkstoff eine Dichte im Bereich von 150 bis 280 kg/m³, besonders bevorzugt im Bereich von 200 bis 250 kg/m³ auf. Die Matrix aus Polyurethan ist vorzugsweise aus mindestens einem aromatischen Diisocyanat und mindestens einem Polyol gebildet.

Um die Voraussetzungen der Einstufung des Verbundwerkstoffes in eine Brandklasse A nach DIN EN 13823 zu erfüllen, liegt der Anteil an expandierten Mineralstoffpartikeln bevorzugt bei mindestens 85 Gew.-%, besonders bevorzugt im Bereich von 87 bis 95 Gew.-%, bezogen auf den Verbundwerkstoff. Bevorzugt besteht der Verbundwerkstoff im Wesentlichen aus expandieren Mineralstoffpartikeln und einer Matrix aus Polyurethan, so dass sich ein organischer Anteil von höchstens 15 Gew.-%, bevorzugt 5 bis 13 Gew.-%, bezogen auf den Verbundwerkstoff, ergibt.

Aufgrund des hohen Anteils an expandierten Mineralstoffpartikeln liegen diese in einer dichten Packung vor, welche lediglich an den Kontaktstellen mit dem benetzenden Bindemittel verbunden sind. Die Zwischenräume bilden eine offenzellige Struktur, die in der Luft zirkulieren kann . Durch diesen direkten Kontakt der expandierten Mineralstoffpartikeln können sehr hohe Druckfestigkeitswerte erreicht werden.

Wenn die Polymermatrix aus einem Polyurethanschaumstoff besteht, kann man im Prinzip von einem ,Schaum-in-Schaum' - Verbundwerkstoff sprechen, der aus einer dichten Schüttung an Blähglaskugeln besteht, wobei die Zwischenräume gefüllt sind mit Schaum. Besonders bevorzugt besteht die Matrix aus einem Polyurethanschaumstoff, wenn eine besonders geringe Wärmeleitfähigkeit erreicht werden soll.

Soweit nicht anders ausgeführt, werden im Rahmen der vorliegenden Erfindung die verwendeten Begriffe wie folgt definiert und die genannten Messgrößen wie folgt bestimmt:
Molekulargewicht: Die Molekulargewichtsangaben beziehen sich auf das Zahlenmittel Mₙ, in g/mol, falls nicht anders angegeben.
Prepolymer: Ein Isocyanatgruppen-haltiges Polymer, erhältlich durch Reaktion eines Isocyanats mit einer Isocyanat-reaktiven Verbindung P, insbesondere einer Verbindung mit einem aciden H-Atom, besonders bevorzugt einem Polyol, wobei das Isocyanat im Überschuss eingesetzt wird, so dass das Prepolymer freie IsocyanatGruppen aufweist.

Im Folgenden werden bevorzugte erfindungsgemäß zu verwendende Komponenten angegeben, deren Kombination, auch wenn sie nicht speziell angegeben ist, als zur Erfindung gehörig zu betrachten ist.

### Expandierte Mineralstoffpartikel

Als expandierte Mineralstoffpartikel bzw. -granulate eigenen sich insbesondere partikelförmige, expandierte Tonmineralien oder Schichtsilikate, insbesondere Blähton und Blähglas. Die expandierten Mineralstoffpartikel weisen bevorzugt eine Korngröße im Bereich von 2 bis 4 mm auf. Die Schüttdichte der expandierten Mineralstoffe liegt bevorzugt im Bereich von 150 bis 210 kg/m³, besonders bevorzugt im Bereich von 170 bis 200 kg/m³. Besonders bevorzugt enthält der Verbundwerkstoff Blähglas als expandierten Mineralstoff.

Die Korngröße des Blähglasgranulats hat einen erheblichen Einfluss auf die mechanischen Eigenschaften des Verbundwerkstoffes, aber auch auf die Menge an benötigtem Bindemittel. Je kleiner die Granulatperlen sind, desto höhere Druckfestigkeiten, E-Moduli, Wärmeleitfähigkeiten und Dichten können erreicht werden. Zudem wird aufgrund der höheren Oberfläche eine größere Menge an Bindemitteln benötigt, so dass unterhalb einer gewissen Größe ein organischer Anteil von 15 Gew.-% nicht mehr unterschritten werden kann.

Die expandierten Mineralstoffpartikel können in monomodaler, bimodaler oder multimodaler Verteilung eingesetzt werden. In der Herstellung des Materials fallen Teilchen mit unterschiedlichen Größen an. Der Partikel-Diameter kann von 0,1 mm bis zu 10 mm variieren. Die Teilchen können nach Größe aufgeteilt werden durch Sieben mit unterschiedlichen Porengrößen. So können die Teilchen in so genannte Siebfraktionen separiert werden. Besonders bevorzugt sind Teilchen mit einem Durchmesser bis 10 mm. In der Regel werden Siebfraktionen mit Siebschnitten im Korngrößenbereich von 0,5 bis 1 mm, bevorzugt im Korngrößenbereich von 1 bis 2 mm und besonders bevorzugt im Korngrößenbereich von 2 bis 4 mm eingesetzt.

### Funktionalisierung der expandierten Mineralstoffpartikel

Die expandierten Mineralstoffpartikel, insbesondere Blähglas, können im Schaumstoff oder der kompakten Matrix fixiert werden. Die Fixierung der Partikel kann durch Einführung von Reaktivgruppen in die Struktur oder durch Einbringen geringer Mengen an Bindemitteln unterstützt werden.

Zur chemischen Funktionalisierung der Mineralstoffe eignen sich beispielsweise funktionalisierte chemische Verbindungen wie Alkoxysilane, wie z. B. 3-Aminopropyl-triethoxysilan oder 3-Aminopropyltrimethoxysilan. Diese Reaktivgruppen werden im ersten Schritt über die Silan-Einheit an die expandierten Mineralstoffpartikel gebunden und im 2. Schritt erlaubt die Aminogruppe eine chemische Anbindung an die Reaktivgruppen der Matrix. Die Behandlung mit Silanen kann zu einer verbesserten Haftung der Bindemittel an dem Mineralstoffpartikel führen und somit die mechanischen Eigenschaften des Verbundwerkstoffs verbessern.

Geeignete Systeme zur Funktionalisierung sind sehr ausführlich in der WO 2005103107 A1, Seite 9, Zeile 18 bis Seite 15, Zeile 4, beschrieben und sind in dieser Anmeldung ausdrücklich enthalten.

Als Bindemittel eignen sich polymere Stoffe beispielsweise Melamin-Formaldehyd-Harze. Geeignete Polyurethan-Harze, Polyesterharze oder Epoxidharze sind dem Fachmann bekannt. Solche Harze sind beispielsweise in Encyclopedia of Polymer Science und Technology (Wiley) unter folgenden Kapiteln zu finden: a) Polyesters, unsaturated: Edition 3, Vol. 11, 2004, S. 41-64; b) Polyurethanes: Edition 3, Vol. 4. 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol. 28, 2003, S. 65-74; b) Polyurethanes: Edition 6, Vol. 28, 2003, S. 667-722 und c) Epoxy resins: Edition 6, Vol. 12, 2003, S. 285-303. Des Weiteren können amino- oder hydroxyfunktionalisierte Polymere, insbesondere ein Polyvinylamin oder Polyvinylalkohol eingesetzt werden. Beispiele auf Basis von Melamin- und Phenolharz sowie Acrylamid sind in EP 0451535B1 und DE 19649796A1 beschrieben.

Die expandierten Mineralstoffpartikel können vor dem Imprägnierschritt oder direkt in der Schaumstruktur bzw. der kompakten Polymermatrix mit den Klebhilfsstoffen imprägniert werden.

### Matrix aus Polyurethan

Die erfindungsgemäßen Verbundwerkstoffe enthalten als Matrix geschäumte oder ungeschäumte Polyurethane, die durch Umsetzung von Isocyanaten mit Isocanat-reaktiven Verbindungen, gegebenenfalls in Gegenwart von Treibmitteln erhalten werden können. Die Mischung der Komponenten zur Herstellung der Polyurethan-Matrix wird im Folgenden auch als Polyurethan-Reaktivmischung bezeichnet. Bevorzugt werden Komponenten eingesetzt, die dem Fachmann zur Herstellung von Polyurethanhartschaumstoffen bekannt sind.

### Isocyanate

Als organische Isocyanate können allgemein bekannte aromatische, aliphatische, cycloaliphatische und/oder araliphatische Isocyanate, bevorzugt Diisocyanate eingesetzt werden, beispielsweise 2,2'-, 2,4'- und/oder 4,4'-Diphenyl-methandiisocyanat (MDI), polymeres MDI, 1,5-Naphthylendiisocyanat (NDI), 2,4- und/oder 2,6-Toluylendiisocyanat (TDI), 3,3'-Dimethyldiphenyl-diisocyanat, 1,2-Di-phenylethandiisocyanat und/oder Phenylendiisocyanat, Tri-, Tetra-, Penta-, Hexa-, Hepta- und/oder Okta¬methylen¬di¬isocyanat, 2-Methylpentamethylen-diisocyanat-1,5, 2-Ethyl-butylen-dimisocyanat-1,4, Pentamethylendiisocyanat-1,5, Butylen-diisocyanat-1,4, 1-iso¬cyanato-3,3,5-tri¬methyl-5-isocyanatomethylcyclohexan (Isophoron-Diisocyanat, IPDI), 1,4- und/oder 1,3-Bis(isocyanatomethyl)-cyclohexan (HXDI), 1,4-Cyclohexan-di¬isocyanat, 1-Methyl-2,4- und/oder -2,6-cyclohexan-diisocyanat und/oder 4,4'-, 2,4'- und 2,2'-Di¬cyclo¬hexyl¬methan-diisocyanat (H12MDI), bevorzugt 2,2'-, 2,4'- und/oder 4,4'-Di¬phenyl¬methan¬di¬iso¬cyanat (MDI), polymeres MDI, 1,5-Naphthylendiisocyanat (NDI), 2,4- und/oder 2,6-Toluylen¬di-isocyanat (TDI), Hexamethylen-di¬iso¬cyanat (HDI), 4,4'-, 2,4'- und 2,2'-Di¬cyclo¬hexyl-methan-diisocyanat (H12MDI) und/oder IPDI, insbesondere 4,4'- MDI und/oder Hexa-methylen¬diisocyanat.

Besonders bevorzugte Isocyanate sind Diphenylmethandiisocyanate (MDI) insbesondere polymere MDI, insbesondere mit einer Viskosität von 10 - 10.000 mPas, insbesondere von 20 - 5.000 mPas gemessen bei 25 °C gemäß DIN53018. Ganz besonders bevorzugte Typen haben eine Viskosität zwischen 50 und 1.000 mPas.

### Isocyanat-reaktive Verbindungen

Als gegenüber Isocyanaten reaktive Verbindungen (P) können allgemein bekannte gegenüber Isocyanaten reaktive Verbindungen eingesetzt werden, beispielsweise Polyesterole, Polyetherole, Polyetheramine und/oder Polycarbonatdiole, die üblicher-weise auch unter dem Begriff "Polyole" zusammengefasst werden, und mit einem Hydroxyl-Wert von 100 bis 1200 mg KOH/g, und einer Funktionalität von 2 bis 8 .

Die Polyetheralkohole haben in der Regel eine Funktionalität zwischen 2 und 8, insbesondere 3 bis 8. Insbesondere kommen Polyetheralkohole, die nach bekannten Verfahren, beispielsweise durch anionische Polymerisation von Alkylenoxiden in Gegenwart von Katalysatoren, vorzugsweise Alkalihydroxiden oder tertiare Aminen, hergestellt werden, zum Einsatz. Als tertiares Amin sei Imidazol besonders bevorzugt.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz. Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen, wie beispielsweise Glucose, Sorbit, Mannit und Saccharose, mehrwertige Phenole, Resole, wie z.B. oligomere Kondensationsprodukte aus Phenol und Formaldehyd, Kondensationsprodukte aus Anilin und Formaldehyd (MDA), Toluoldiamin (TDA) und Mannich-Kondensate aus Phenolen, Formaldehyd und Dialkanolaminen sowie Melamin eingesetzt.

Die Polyetheralkohole besitzen eine Funktionalität von vorzugsweise 3 bis 8 und Hydroxylzahlen von vorzugsweise 100 mg KOH/g bis 1200 mg KOH/g und insbesondere 120 mg KOH/g bis 700mg KOH/g.

Durch den Einsatz von difunktionellen Polyolen, beispielsweise Polyethylenglykolen und/oder Polypropylenglykolen, mit einem Molgewicht im Bereich zwischen 400 bis 2000 in der Polyolkomponente kann die Viskosität der Polyolkomponente angepasst werden.

Gemeinsam mit den Polyetheralkoholen können Polyesteralkohole eingesetzt werden, Dieses werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Oecandicarbonsäure, Maleinsäure, Fumarsäure und vorzugsweise Phthalsäure, Isophthalsäure, Terephthalsäure und die isomeren Naphthalindicarbonsäuren, hergestellt.

Zu den Verbindungen mit mindestens zwei gegenüber Isocyanat reaktiven Wasserstoffatomen gehören auch die gegebenenfalls mitverwendeten Kettenverlängerer und Vernetzer. Die Polyurethan-Hartschaumstoffe können ohne oder unter Mitverwendung von Kettenverlängerungs-und/oder Vernetzungsmitteln hergestellt werden. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

### Treibmittel:

Die Herstellung der Polyurethan-Schaumstoffe erfolgt üblicherweise in Anwesenheit von Treibmitteln. Als Treibmittel kann vorzugsweise Wasser verwendet werden, das mit Isocyanatgruppen unter Abspaltung von Kohlendioxid reagiert. Ein weiteres häufig eingesetztes chemisches Treibmittel ist Ameisensäure, die mit Isocyanat unter Freisetzung von Kohlenmonoxid und Kohlendioxid reagiert. In Kombination mit oder an Stelle der chemischen Treibmittel können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, Alkane, insbesondere niedrigsiedende Alkane und Fluoralkane, vorzugsweise, Alkane, insbesondere niedrigsiedende Alkane und Fluoralkane.

Die physikalischen Treibmittel werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1 ,3,3-Pentafluorbutan, 1,1,1 ,3,3-Pentafluorpropan, 1,1,1 ,2,3-Pentafluor-propen, 1-Chlor-3,3,3-trifluorpropen, 1,1,1,2-Tetrafluorethan, Difluorethan und 1,1,1 ,2,3,3,3-Heptafluorpropan, sowie Perfluoralkane, wie, C3F8, C4F1 0, C5F12, C6F14, und C7F16. besonders bevorzugt sind Pentane, insbesondere Cyclopentan. Die genannten physikalischen Treibmittel können allein oder in beliebigen Kombinationen untereinander eingesetzt werden.

In einer bevorzugten Ausführungsform der Erfindung kann eine Mischung aus physikalischen und chemischen Treibmitteln eingesetzt werden. Besonders bevorzugt sind Mischungen aus physikalischen Treibmitteln und Wasser, insbesondere von Kohlenwasserstoffen und Wasser. Unter den Kohlenwasserstoffen sind die Pentane, und hier insbesondere das Cyclopentan, besonders bevorzugt.

### Additive

Der Verbundstoff kann in wirksamen Mengen weitere Zusatzstoffe wie z. B. Farbstoffe, Pigmente, Füllstoffe, Flammschutzmittel, Synergisten für Flammschutzmittel, Antistatica, Stabilisatoren, Weichmacher, Treibmittel, Katalysatoren, oberflächenaktiven Substanzen, Schaumstabilisatoren(z. B. Silicone), und Zellreglern enthalten.

Zur Verbesserung der Brandschutzeigenschaften kann der Verbundwerkstoff zusätzlich Flammschutzmittel enthalten. Bevorzugt enthält er Phosphate oder Polyphosphate, z. B. Ammoniumpolyphosphat (APP), Trischloropropylphosphat, Diethylethanphosphonat, Triethylphosphat, diphenylkresylphosphat, oder Aluminiumtrihydroxid als Flammschutzmittel. Die Flammschutzmittel können der Polyurethan-Reaktivmischung oder den einzelnen Komponenten zugemischt werden. Bevorzugt werden sie jedoch mit dem expandierten Mineralstoff vorgemischt in die Form gegeben.

### Katalysatoren:

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind stark basische Amine, wie z. B. tertiäre aliphatische Amine, Imidazole, Amidine, sowie Alkanolamine, und/oder metallorganische Verbindungen, insbesondere solche auf Basis von Zinn.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Weitere Angaben zu eingesetzten Ausgangsverbindungen finden sich beispielsweise im Kunststoffhandbuch, Band 7 "Polyurethane", herausgegeben von Gunter Oertel, Carl-Hanser-Verlag München, 3. Auflage, 1993.

### Herstellung der Polyurethane

Zur Herstellung der Hartschaumstoffe auf Isocyanatbasis werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich zwischen 100 und 220, vorzugsweise zwischen 115 und 180, liegt. Die Polyurethan-Hartschaumstoffe können diskontinuierlich oder kontinuierlich mit Hilfe bekannter Mischvorrichtungen hergestellt werden.

Bei der Herstellung von Polyisocyanuratschaumstoffen kann auch mit einem Index von > 180, vorzugsweise 300 - 400, gearbeitet werden.

Die Vermischung der Ausgangskomponenten kann mit Hilfe bekannter Mischvorrichtungen erfolgen.

Üblicherweise werden die Polyurethanhartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen, den Treibmitteln, den Katalysatoren sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35 °C, vorzugsweise von 20 bis 30 °C gemischt. Das Reaktionsgemisch kann mit Hoch- oder Niederdruckdosiermaschinen vermischt werden.

Die Dichte der hierfür eingesetzten Hartschaumstoffe, die so genannte Freischaumdichte des Schaums, beträgt vorzugsweise 10 bis 70 kg/m³.

### Herstellung

Zur Herstellung der erfindungsgemäßen Verbundwerkstoffe können die expandierten Mineralstoffpartikel beispielsweise in einer solchen Weise vorgelegt werden, dass sie anschließend nicht bzw. nicht wesentlich durch die geschäumte oder ungeschäumte Polyurethan-Reaktivharzmischung auseinander gedrückt werden können. Hierfür eignet sich beispielsweise eine randvoll mit einer dicht gepackten Schüttung gefüllte, fest verschließbare Form oder ein Doppelbandlaminator, bei dem die Höhe der Schüttung mit der Verarbeitungshöhe des Laminators übereinstimmt.

Die Zugabe der geschäumten oder ungeschäumten Polyurethan-Reaktivharzmischung erfolgt in einer solchen Weise, dass ein Gewichtsanteil von 20 Gew.-%, bevorzugt 15 Gew.-% an organischen Bestandteilen des Verbundwerkstoffes nicht überschritten wird, aber sämtliche Granulatperlen fest miteinander verklebt werden.

Im Falle einer kompakten Matrix aus ungeschäumtem Polyurethan werden die expandierten Mineralstoffpartikel mit dem Polyurethan-Reaktivgemisch verrührt und in die entsprechende Form gebracht und ausgehärtet.

Bei einer Matrix aus geschäumtem Polyurethan wird das treibmittelhaltige Polyurethan-Reaktivgemisch gleichmäßig über die vorliegende Schüttung der expandierten Mineralstoffpartikel gegeben und ausreagieren gelassen, ohne dass die einzelnen expandierten Mineralstoffpartikel nennenswert durch den Schäumprozess auseinandergedrückt werden können.

Schäumfähige Polyurethan-Reaktivmischungen sollten sich durch eine hohe Fließfähigkeit und eine relativ lange Reaktionszeit auszeichnen, damit die Hohlräume zwischen den einzelnen expandierten Mineralstoffpartikel durch die fließfähige Polyurethan-Reaktivmischung benetzt und beim Aufschäumen ausgefüllt werden können. Ausreichend lange Reaktionszeiten können durch Art und Menge der eingesetzten Katalysatoren eingestellt werden. Um eine hinreichend hohe Aushärtung des Reaktionsgemisches auch bei niedrigen Katalysatormengen oder ganz ohne Katalysator zu erreichen, kann die Form in der die Reaktion abläuft auf entsprechend hohe Temperaturen geheizt werden.

Wenn das eingesetzte Schaumsystem in einer offenen Form aufgeschäumt wird, sollte es eine Fadenziehzeit von mindestens 60 Sekunden, bevorzugt mindestens 90 Sekunden und besonders bevorzugt von mindestens 120 Sekunden aufweisen. Um die fehlende Temperatur durch eine beheizte Form zu kompensieren kann man beispielsweise ein Polyurethan-übliches Gemisch aus Aminkatalysatoren einsetzen, um vergleichbare Reaktionszeiten zu erzielen.

Die Dichte eines unter Bedingungen, die denen in einer beheizten Form in Bezug auf die Reaktionszeiten vergleichbar sind, frei geschäumten Polyurethanschaumstoffs liegt im Bereich von 70 kg/m³ oder weniger, bevorzugt von 50 kg/m³ oder weniger, besonders bevorzugt von 40 kg/m³ oder weniger.

Die Wärmeleitfähigkeit des ungefüllten Polyurethanschaumstoffes liegt im Bereich von 30 mW/m*K oder weniger, bevorzugt 25 mW/m*K oder weniger, besonders bevorzugt 23 mW/m*K oder weniger.

Die Blähglasgranulate können vor der Verklebung mit verschiedenen Zusatzstoffen beschichtet werden, wie z.B. Flammschutzmitteln, Katalysatoren.

Ein besonders bevorzugtes Verfahren zur Herstellung des erfindungsgemäßen Verbundwerkstoffes umfasst die Stufen
a) Einbringen von expandierten Mineralstoffpartikel in eine beheiz- und verschließbare, Entlüftungsöffnungen aufweisende Form,
b) Benetzen der expandierten Mineralstoffpartikel mit einer gegebenenfalls Treibmittelhaltigen Polyurethan-Reaktivharzmischung,
c) Schließen der Form, wobei die geschlossene Form ein Volumen aufweist, das durch die dichteste Packung der expandierten Mineralstoffpartikel vorgegeben ist, und
d) Aushärten und Entformen.

### Verarbeitung

Der erfindungsgemäße Verbundwerkstoff kann auf mindestens einer Seite mit mindestens einer Deckschicht kaschiert sein, um die Eigenschaften der Oberfläche zu verbessern, so z. B. die Robustheit zu erhöhen, sie als Dampfsperre auszubilden oder gegen leichte Verschmutzung zu schützen. Die Deckschichten können auch die mechanische Stabilität des Verbundwerkstoffs verbessern. Durch eine Beschichtung mit Deckschichten kann insbesondere auch verhindert werden, dass die erhaltenen Platten staubig werden, was die Haftung in z. B. Fassadenelementen negativ beeinflussen könnte. Werden auf beiden Flächen Deckschichten verwendet, so können diese gleich oder verschieden sein.

Als Deckschichten eignen sich alle dem Fachmann bekannten Materialien. Sie können nichtporös sein und damit als Dampfsperre wirken, wie z. B. Kunststofffolien, vorzugsweise Metallfolien oder metallisierte Kunststofffolien, die Wärmestrahlung reflektieren. Es können aber auch poröse Deckschichten verwendet werden, die ein Eindringen von Luft in das Material ermöglichen und damit zu einer besseren Schalldämpfung führen, wie z. B. poröse Folien, Papiere, Gewebe oder Vliese.

Die Oberfläche des Verbundmaterials kann auch mit einem Material beschichtet werden, um die Brennbarkeit zu reduzieren, z. B. mit einer Intumeszenz-Schicht.

Des Weiteren kann eine aufgebrachte Schicht die Haftung zu anderen Substraten wie z. B. Beton verbessern. Die Feuchtigkeitsaufnahme kann durch das Aufbringen einer geeigneten Schicht reduziert werden. Eine solche Schicht kann auch aus einem Reaktivsystem wie z. B. Epoxidharzen oder Polyurethanen bestehen, die ggf. durch Sprühen, Rakeln, Gießen oder Streichen o. ä. aufgebracht werden können.

Die Deckschichten können selbst auch aus mehreren Schichten bestehen. Die Deckschichten können mit der Polyurethan-Reaktivmischung, die für die Herstellung der Matrix verwendet wird, befestigt sein, es kann aber auch ein anderer Kleber Verwendung finden.

Die Oberfläche des Verbundmaterials kann auch durch Einbringen mindestens eines geeigneten Materials in eine Oberflächenschicht geschlossen und verfestigt werden. Als Materialien sind z. B. thermoplastische Polymere, wie z. B. Polyethylen und Polypropylen, oder Harze wie z. B. Melaminformaldehydharze geeignet.

Die erfindungsgemäßen Verbundmaterialien weisen Wärmeleitfähigkeiten zwischen 10 und 100 mW/m*K, vorzugsweise im Bereich von 30 bis 80 mW/m*K, besonders bevorzugt im Bereich von 40 bis 65 mW/m*K auf.

An Ober- und Unterseite des Verbundwerkstoffs kann es zu einem erhöhten Anteil an Polyurethan kommen, wenn der expandierte Mineralstoff hier nicht optimal gepackt werden kann und somit größere Hohlräume als in der Plattenmitte vorliegen, die mit Polyurethan ausgefüllt werden. Dies kann sich negativ auf den FIGRA-Index (Fire Growth Rate nach DIN EN 13823 : 2002-06) auswirken, da so anfänglich eine erhöhte Menge an organischem Material direkt der Flamme ausgesetzt ist.

Dies kann vermieden werden, indem man die Seiten des Verbundwerkstoffes, die einen erhöhten Polyurethananteil aufweisen, soweit abschleift, bis die innere Struktur des Verbundwerkstoffes in der gewünschten Zusammensetzung hervortritt, bei der die Granulatperlen dichter gepackt sind als sie es am Plattenrand sein können und somit der Polyurethananteil an den Außenseiten weitestgehend dem im Inneren des Verbundwerkstoffs entspricht.

Den Effekt, die erhöhte Polyurethanmenge an den Außenseiten vor direkter Flammeneinwirkung zu schützen, kann man auch durch eine aufgebrachte unbrennbare Deckschicht erzielen.

Die Komposite können im selben Herstellungsschritt mit Deckschichten aus verschiedenen Materialien wie z.B. Stahlblech, Aluminiumfolie, Glasfasermatten, usw. versehen werden, die in die Form eingelegt werden, bevor das Granulat eingefüllt wird bzw. die das untere und / oder obere Förderband eines Doppelbandlaminators o.ä. bilden bzw. auf diesem aufliegen.

Gegenstand der Erfindung ist auch ein Schichtverbundwerkstoff, bestehend aus mindestens einer Schicht aus einer beliebigen Ausführungsform des oben beschriebenen Verbundwerkstoffs und mindestens einer auf eine oder mehrere Oberflächen des Verbundwerkstoffes angebrachte, nicht-entflammbare Schicht. Bevorzugt wird als nicht-entflammbare Schicht eine Metallfolie, besonders bevorzugt eine Aluminiumfolie eingesetzt.

### Verwendung

Die erfindungsgemäßen Verbundwerkstoffe können für verschiedenste Anwendungen eingesetzt werden. Aufgrund der Eigenschaftskombination hohe Druckfestigkeit, Schall- und Wärmedämmung sowie hervorragende Brandschutzeigenschaften ist eine große Vielfalt von Applikationen möglich, beispielsweise Brandschutzriegel im Hausbau, feuerfeste, wärmedämmende Abdeckung von Jalousiekästen, schalldämmende feuerfeste Deckenverkleidungen, Ersatz von Faserverbundplatten im Möbelbau, Estrichersatz, schnell aushärtender Fußbodenbelag, Wärme-, Schall- und Trittschalldämmung, hochfester Bodenbelag für Kühlhäuser, Schlachthallen, Container oder Lagerhallen. Weitere Beispiele sind die Wärmedämmung von Gebäuden, Heizkesseln, Kühlgeräten, zur Dachdämmung, insbesondere für Bauten mit Flachdächern, sowie in technischen Anwendungen in Kühlschränken, Transportboxen, Sandwich-Bauteilen, Rohrdämmungen und technischen Schäumen.

### Beispiele

In den Beispielen und Vergleichsbeispielen wurden folgende, in Tabelle 1 genannten, Komponenten verwendet:

**Tabelle 1**

| Kurzbezeichnung | Zusammensetzung |
|---|---|
| Blähglasgranulat 1 | Liaver 2-4 mm von der Firma Liaver GmbH & Co. KG, Ilmenau, Deutschland, Schüttdichte 190 kg/m³ |
| Blähglasgranulat 2 | Liaver 1-2 mm von der Firma Liaver GmbH & Co. KG, Ilmenau, Deutschland, Schüttdichte 220 kg/m³ |
| Blähglasgranulat 3 | Liaver 0,5-1 mm von der Firma Liaver GmbH & Co. KG, Ilmenau, Deutschland, Schüttdichte 250 kg/m³ |
| Polyol 1 | Polyol hergestellt durch Anlagerung von Propylenoxid an eine Mischung aus Saccharose, Pentaerythritol und Diethylenglykol, Hydroxylzahl 405 mg KOH/g, Funktionalität 3,9 |
| Polyol 2 | Polypropylenglykol mit M_{w} = 1000 g/mol |
| Stabilisator 1 | Tegostab B 8404, Polyether modifiziertes Polysiloxan von Evonik Goldschmidt GmbH, Essen, Deutschland |
| Isocyanat 1 | Lupranat M 20 von der BASF SE, Ludwigshafen, Deutschland, lö-sungsmittelfreies Produkt auf Basis von 4,4'-Diphenylmethandiisocyanat (MDI) mit höherfunktionellen Oligomeren und Isomeren, NCO = 31,5 % |
| Treibmittel 1 | Solkane 365/227 (87:13) von der Firma Solvay Fluor und Derivate, Frankfurt, Deutschland, Gemisch aus Pentafluorbutan und Heptafluorpropan |
| Prepolymer 1 | Reaktionsprodukt aus einem 2,4'- und 4,4'-MDI Gemisch und einem Polyol auf Basis Glycerin und einem Propylenoxid und Ethylenoxid-gemisch (Hydroxylzahl 42 mg KOH/g, Funktionalität 2,7), NCO = 14,9 % |
| Katalysator 1 | Kaliumformiat 36,27 % in Monoethylenglykol |

### Beispiel 1:

Kompakt verklebtes Blähglasgranulat
340 g Blähglasgranulat 1 werden mit 37,8 g Prepolymer 1 verrührt und in eine unbeheizte offene Form der Abmessung 20,4 cm x 20,4 cm x 4 cm gegeben und über Nacht an der feuchten Luft zu einer Platte ausreagieren gelassen.

Die am nächsten Tag an der Platte gemessenen Werte können Tabelle 2 entnommen werden. Dabei wurde der organische Anteil an der abgekühlten, entgrateten Platte als Quotient aus der Differenz der Gesamtmasse und der Masse des eingesetzten Blähglases zu der Gesamtmasse ermittelt.

### Beispiel 2:

Geschäumt verklebtes Blähglasgranulat
340 g Blähglasgranulat 1 werden in eine auf 70 °C beheizte verschließbare Form der Abmessung 20,4 cm x 20,4 cm x 4 cm gegeben. 17,85 g Polyol 1, 9,21 g Polyol 2, 0,73 g Stabilisator 1, 1,73 g Wasser und 6,76 g Tri 2-chlorisopropylphosphat werden vermischt. Unter diese Mischung werden 9,99 g Treibmittel 1 gerührt. Die erhaltene Komponente wird mit 53,4 g Isocyanat 1 für 10 s bei 1500 rpm verrührt. 67,13 g des Reaktivgemisches werden gleichmäßig über das Blähglasgranulat 1 verteilt und die Form geschlossen. Durch die Entlüftungslöcher der Form tritt eine geringe Schaummenge aus. Nach 1 h wird die ausgehärtete Platte entformt und entgratet.

Die am nächsten Tag an der Platte gemessenen Werte können Tabelle 2 entnommen werden. Dabei wurde der organische Anteil an der abgekühlten, entgrateten Platte als Quotient aus der Differenz der Gesamtmasse und der Masse des eingesetzten Blähglases und der Gesamtmasse ermittelt.

### Beispiel 3:

Geschäumt verklebtes Blähglasgranulat mit zusätzlich verdichtetem PU-Schaum 340 g Blähglasgranulat 1 werden in eine auf 70 °C beheizte verschließbare Form der Abmessung 20,4 cm x 20,4 cm x 4 cm gegeben. 25,65 g Polyol 1, 13,23 g Polyol 2, 0,84 g Stabilisator 1, 1,99 g Wasser und 0,04 g Katalysator 1 werden vermischt. Die erhaltene Komponente wird mit 68,0 g Isocyanat 1 für 10 s bei 1500 rpm verrührt. Das Reaktivgemisch wird gleichmäßig über das Blähglasgranulat 1 verteilt und die Form geschlossen. Durch die Entlüftungslöcher der Form tritt eine geringe Schaummenge aus. Nach 0,5 h wird die ausgehärtete Platte entformt und entgratet. Durch die Art der Herstellung wurde der Schaum zwischen den Granulatperlen verdichtet.

Die am nächsten Tag an der Platte gemessenen Werte können Tabelle 2 entnommen werden. Dabei wurde der organische Anteil an der abgekühlten, entgrateten Platte als Quotient aus der Differenz der Gesamtmasse und der Masse des eingesetzten Blähglases und der Gesamtmasse ermittelt.

**Tabelle 2**

| | Einheit | B1 | B2 | B 3 |
|---|---|---|---|---|
| Schüttdichte des Blähglasgranulats | kg/m³ | 190 | 190 | 190 |
| Dichte des Verbundwerkstoffs | kg/m³ | 226 | 236 | 250 |
| Organischer Anteil | Gew.-% | 9,6 | 13,5 | 18,3 |
| Druckfestigkeit | MPa | Nicht gemessen | 1,0 | 1,5 |
| E-Modul | MPa | Nicht gemessen | 65 | 110 |
| Wärmeleitfähigkeit | mW/m*K | 75,3 | 64,4 | 58,2 |

### Beispiel 4:

Geschäumt verklebtes mit Flammschutz beschichtetes Blähglasgranulat
2560 g Blähglasgranulat 1 werden mit einem Gemisch aus 75,3 g Ammoniumpolyphosphat und 75,3 g Tris(2-chlorisopropyl)phosphat vorgerührt. Das homogene Gemisch wird in eine auf 70 °C beheizte hydraulisch verschließbare Form der Abmessung 58 cm x 58 cm x 4 cm gegeben. 127,27 g Polyol 1, 65,66 g Polyol 2, 4,17 g Stabilisator 1 und 9,88 g Wasser werden vermischt. Unter diese Mischung werden 57,02 g Treibmittel 1 gerührt. Die erhaltene Komponente wird mit 336,0 g Isocyanat 1 für 10 s bei 1500 rpm verrührt. Das Reaktivgemisch wird gleichmäßig über das Blähglasgranulat 1 verteilt und die Form geschlossen. Durch die Entlüftungslöcher der Form tritt eine geringe Schaummenge aus. Nach 1 h wird die ausgehärtete Platte entformt und entgratet. 9 Platten wurden auf eine Größe von 50 cm x 50 cm x 4 cm gesägt und an einer Seite abgeschliffen, um eine glatte Oberfläche zu erhalten. Der organische Anteil der Platten wurde wie in Beispiel 1 beschrieben vor dem Abschleifen mit 14,7 % bestimmt. Anschließend wurden sie einer Brandprüfung gemäß DIN EN 13823 : 2002-06 ("single burning item" (SBI) -Test) unterzogen. Ergebnis: FIGRA (Fire growth rate) -index = 185,64 W/s (erfüllt die Unterklassifizierung C), THR₆₀₀ₛ (Total heat release in den ersten 600 s) = 3,24 MJ (erfüllt die Unterklassifizierung A2).

### Beispiel 5:

Geschäumt verklebtes mit Flammschutz beschichtetes Blähglasgranulat mit Aluminiumdeckschicht

Wie Beispiel 3, wobei eine Aluminiumfolie in die Form eingelegt wurde, bevor das Blähglasgranulat 1 in diese eingefüllt wurde. Man erhält ein Kompositmaterial mit einer fest verklebten Aluminiumdeckschicht an einer Seite. 9 Platten wurden auf eine Größe von 50 cm x 50 cm x 4 cm gesägt und an der beschichteten Seite einer Brandprüfung gemäß DIN EN 13823 : 2002-06 ("single burning item" (SBI) -Test) unterzogen. Ergebnis: FIGRA (Fire growth rate) -index = 70,07 W/s (erfüllt die Unterklassifizierung A2), THR₆₀₀ₛ (Total heat release in den ersten 600 s) = 2,55 MJ (erfüllt die Unterklassifizierung A2). Als mittlerer organischer Anteil der Platten wurde der gleiche wie in Beispiel 4 (14,7 %) angenommen. Die Aluminiumdeckschicht wurde dabei nicht berücksichtigt.

Es konnte gezeigt werden, dass beide Proben im SBI-Test deutlich unter den geforderten 7,5 MJ im THR₆₀₀ₛ-Test liegen. Die Aluminiumdeckschicht reduziert den FIGRA-index unter den für die Unterklassifizierung A2 geforderten Wert von 120 W/s.

### Vergleichsbeispiele

### Vergleichsbeispiel 1:

Geschäumt verklebtes Blähglasgranulat mit unterschiedlichen Partikelgrößen Es wird eine Mischung (im folgenden Komponente A) aus 61,06 Teilen Polyol 1, 31,50 Teilen Polyol 2, 2,00 Teilen Stabilisator 1, 4,74 Teilen Wasser und 0,10 Teilen Katalysator 1 hergestellt.
a) 364 g Blähglasgranulat 2 werden in eine auf 70 °C beheizte verschließbare Form der Abmessung 20,4 cm x 20,4 cm x 4 cm gegeben. Eine Mischung aus 53,5 g der Komponente A und 86,5 g Isocyanat 1 (für 10 s bei 1500 rpm verrührt) wird gleichmäßig über das Blähglasgranulat 2 verteilt und die Form geschlossen. Durch die Entlüftungslöcher der Form tritt eine geringe Schaummenge aus. Nach 0,5 h wird die ausgehärtete Platte entformt und entgratet. Die am nächsten Tag an der Platte gemessenen Werte können Tabelle 3 entnommen werden. Dabei wurde der organische Anteil an der abgekühlten, entgrateten Platte als Quotient aus der Differenz der Gesamtmasse und der Masse des eingesetzten Blähglases und der Gesamtmasse ermittelt.
b) 468 g Blähglasgranulat 3 werden in eine auf 70 °C beheizte verschließbare Form der Abmessung 20,4 cm x 20,4 cm x 4 cm gegeben. Eine Mischung aus 68,8 g der Komponente A und 111,2 g Isocyanat 1 (für 10 s bei 1500 rpm verrührt) wird gleichmäßig über das Blähglasgranulat 3 verteilt und die Form geschlossen. Durch die Entlüftungslöcher der Form tritt eine geringe Schaummenge aus. Nach 0,5 h wird die ausgehärtete Platte entformt und entgratet. Die am nächsten Tag an der Platte gemessenen Werte können Tabelle 3 entnommen werden. Dabei wurde der organische Anteil an der abgekühlten, entgrateten Platte als Quotient aus der Differenz der Gesamtmasse und der Masse des eingesetzten Blähglases und der Gesamtmasse ermittelt.

Mit geringer werdender Granulatkorngröße wird die benötigte Polyurethanmenge größer, da die zu verklebende Oberfläche größer wird. Somit kann bei zu kleinen Korngrößen ein organischer Anteil von 20 % oder kleiner nicht mehr erreicht werden.

**Tabelle 3: Eigenschaften der Verbundwerkstoffe aus den Vergleichsversuchen**

| Werte in Schäumrichtung | Einheit | V1a) | V1b) |
|---|---|---|---|
| Schüttdichte Blähglasgranulat | kg/m³ | 220 | 250 |
| Dichte Verbundwerkstoff | kg/m³ | 290 | 360 |
| Organischer Anteil | Gewichts% | 27,1 | 27,9 |

## Patentansprüche

1. Verbundwerkstoff, enthaltend expandierte Mineralstoffpartikel und eine Matrix aus Polyurethan, **dadurch gekennzeichnet, dass** der Anteil an expandierten Mineralstoffpartikel mindestens 80 Gew.-%, bezogen auf den Verbundwerkstoff, beträgt.

2. Verbundwerkstoff nach Anspruch 1, **dadurch gekennzeichnet, dass** er eine Dichte im Bereich von 150 bis 280 kg/m³ aufweist.

3. Verbundwerkstoff nach Anspruch 1 oder 2, **dadurch gekennzeichnet, dass** die expandierten Mineralstoffpartikel Korngrößen im Bereich von 2 bis 4 mm aufweisen.

4. Verbundwerkstoff nach einem der Ansprüche 1 bis 3, **dadurch gekennzeichnet, dass** die expandierten Mineralstoffe eine Schüttdichte im Bereich von 150 bis 210 kg/m³ aufweisen.

5. Verbundwerkstoff nach einem der Ansprüche 1 bis 4, **dadurch gekennzeichnet, dass** er Blähglas als expandierter Mineralstoff enthält.

6. Verbundwerkstoff nach einem der Ansprüche 1 bis 5, **dadurch gekennzeichnet, dass** die Matrix aus Polyurethan aus mindestens einem aromatischen Diisocyanat und mindestens einem Polyol gebildet ist.

7. Verbundwerkstoff nach einem der Ansprüche 1 bis 6, **dadurch gekennzeichnet, dass** die Matrix aus einem Polyurethanschaumstoff besteht.

8. Verbundwerkstoff nach einem der Ansprüche 1 bis 7, **dadurch gekennzeichnet, dass** er ein phosphorhaltiges Flammschutzmittel enthält.

9. Verbundwerkstoff nach einem der Ansprüche 1 bis 8, **dadurch gekennzeichnet, dass** er ein Phosphonat, Phosphonit, Phosphat oder Polyphosphat als Flammschutzmittel enthält.

10. Schichtverbundwerkstoff, bestehend aus mindestens einer Schicht aus einem Verbundwerkstoff nach einem der Ansprüche 1 bis 9 und mindestens einer auf eine oder mehrere Oberflächen des Verbundwerkstoffes angebrachte, nicht-entflammbare Schicht.

11. Schichtverbundwerkstoff nach Anspruch 10, **dadurch gekennzeichnet**, das er als nicht-entflammbare Schicht eine Metallfolie aufweist.

12. Verwendung des Verbundwerkstoffes nach einem der Ansprüche 1 bis 9 oder des Schichtverbundwerkstoffes nach Anspruch 10 oder 11 zur Wärmedämmung von Gebäuden.

13. Verfahren zur Herstellung eines Verbundwerkstoffes nach einem der Ansprüche 1 bis 8, umfassend die Stufen
a) Einbringen von expandierten Mineralstoffpartikel in eine beheiz- und verschließbare, Entlüftungsöffnungen aufweisende Form,
b) Benetzen der expandierten Mineralstoffpartikel mit einer gegebenenfalls Treibmittelhaltigen Polyurethan-Reaktivharzmischung,
c) Schließen der Form, wobei die geschlossene Form ein Volumen aufweist, das durch die dichteste Packung der expandierten Mineralstoffpartikel vorgegeben ist, und
d) Aushärten und Entformen.
